# EUROPEAN PATENT APPLICATION

(11) **EP 4 129 659 A1**
(43) Date of publication of application: **08.02.2023**
(21) Application number: 21780694.2
(22) Date of filing: 30.03.2021
(51) Int. Cl.: B32B 27/00, B32B 27/30, B32B 27/40

(54) **DECORATIVE SHEET AND DECORATIVE RESIN MOLDED ARTICLE**

(30) Priority: 31.03.2020 JP 2020063860
(71) Applicant: DAI NIPPON PRINTING CO., LTD., Tokyo 162-8001 (JP)
(72) Inventor: YOKOYAMA, Daisuke, Tokyo 162-8001 (JP); MIZUNO, Kio, Tokyo 162-8001 (JP); KANAZAWA, Nahomi, Tokyo 162-8001 (JP); OMORI, Yoshinobu, Tokyo 162-8001 (JP); KADONO, Hirokazu, Tokyo 162-8001 (JP)
(74) Representative: Beck Greener LLP
(86) International application number: PCT/JP2021/013543
(87) International publication number: WO 2021/200948

(57) **Abstract**

A main object of the present disclosure is to provide a decorative sheet including a barrier layer having excellent solid fragrance resistance and close adhesiveness. The present disclosure achieves the object by providing a decorative sheet comprising at least a substrate sheet, a barrier layer, and a surface protecting layer in this order, wherein the barrier layer includes a vinyl alcohol based resin, and a polyurethane resin.

## Description

### Technical Field

The present disclosure relates to a decorative sheet, and a decorative resin molded article.

### Background Art

For vehicle interior material, for example, a decorative resin molded article wherein a decorative sheet is stacked on the surface of a resin molded article, is used.

Patent Document 1 discloses a three-dimensional molded decorative sheet comprising at least a surface protecting layer on a substrate, wherein the surface protecting layer includes a cured product of a composition including polycarbonate (meth)acrylate, and a polyfunctional (meth)acrylate at a predetermined proportion. An object of this technique is to provide a decorative sheet including a surface protecting layer capable of realizing both of a stretch resistance and a three-dimensional moldability at the same time.

### Citation List

### Patent Document

Patent Document 1: Japanese Patent No. 6020642

### Summary of Disclosure

### Technical Problem

When a fragrance component included in a solid fragrance penetrates from a surface protecting layer side of a decorative sheet and reaches to a substrate sheet, the substrate sheet may be swelled in some cases. Meanwhile, in order to improve the solid fragrance resistance, provision of a barrier layer on the decorative sheet is assumed. Although the solid fragrance resistance is easily improved with a barrier layer including vinyl alcohol based resin, the close adhesiveness thereof tends to be low.

The present disclosure has been made in view of the above circumstances, and a main object is to provide a decorative sheet including a barrier layer having excellent solid fragrance resistance and close adhesiveness.

### Solution to Problem

The present disclosure provides a decorative sheet comprising at least a substrate sheet, a barrier layer, and a surface protecting layer in this order, wherein the barrier layer includes a vinyl alcohol based resin, and a polyurethane resin.

According to the present disclosure, a decorative sheet including a barrier layer having excellent solid fragrance resistance and close adhesiveness may be obtained by the barrier layer including a vinyl alcohol based resin and a polyurethane resin.

In the disclosure, the barrier layer may have a peak in a range of 1130 cm⁻¹ or more and 1160 cm⁻¹ or less in an infrared ray absorption spectrum.

In the disclosure, a proportion of the polyurethane resin with respect to a total of the vinyl alcohol based resin and the polyurethane resin in the barrier layer may be 5 mass% or more and 40 mass% or less.

In the disclosure, the vinyl alcohol based resin may be a modified polyvinyl alcohol resin including a hydrophobic group other than acetic acid group.

In the disclosure, the hydrophobic group may include a reactive group.

In the disclosure, the reactive group may be a reactive carbonyl group.

In the disclosure, the modified polyvinyl alcohol resin may include an acetoacetyl group containing the reactive carbonyl group as the hydrophobic group.

In the disclosure, the surface protecting layer may include a polyurethane resin.

In the disclosure, a Martens hardness of the surface protecting layer may be 40 N/mm² or less.

In the disclosure, the surface protecting layer and the barrier layer may be in direct contact.

The present disclosure also provides a decorative resin molded article comprising a resin molded article, and a decorative sheet placed on a surface of the resin molded article, wherein the decorative sheet includes at least a substrate sheet, a barrier layer, and a surface protecting layer in this order, and the barrier layer includes a vinyl alcohol based resin, and a polyurethane resin.

According to the present disclosure, a decorative resin molded article including a barrier layer having excellent solid fragrance resistance and close adhesiveness may be obtained by using the decorative sheet described above.

### Advantageous Effects of Disclosure

The present disclosure exhibits effects that a decorative sheet including a barrier layer having excellent solid fragrance resistance and close adhesiveness may be provided.

### Brief Description of Drawings

FIG. 1 is a schematic cross-sectional view illustrating an example of a decorative sheet in the present disclosure.
FIG. 2 is an IR spectrum of the decorative sheet obtained in Example 3.

### Description of Embodiments

The decorative sheet and the decorative resin molded article in the present disclosure are explained in detail.

### A. Decorative sheet

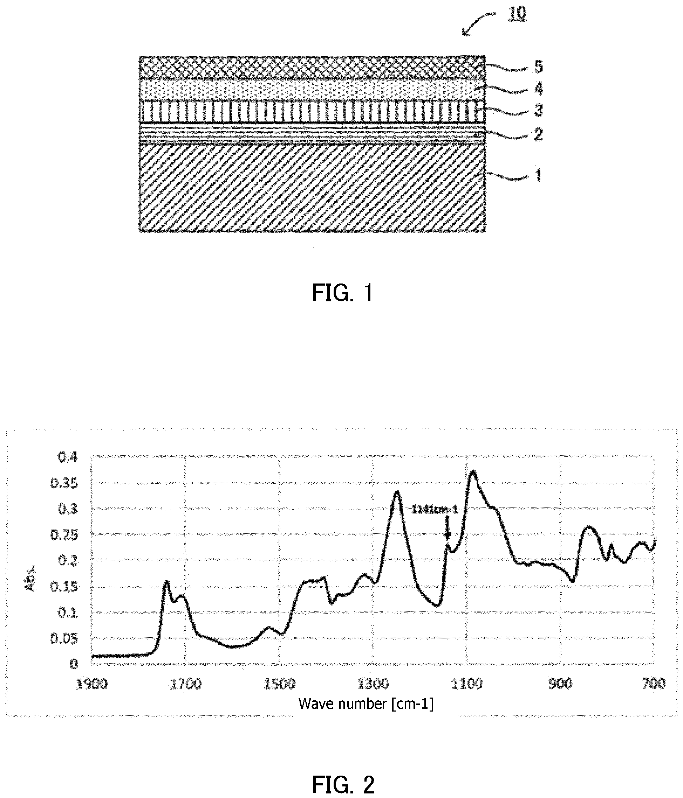

FIG. 1 is a schematic cross-sectional view illustrating an example of a decorative sheet in the present disclosure. Decorative sheet 10 shown in FIG. 1 comprises substrate sheet 1, pattern layer 2, primer layer 3, barrier layer 4, and surface protecting layer 5 in this order. The barrier layer 4 includes a vinyl alcohol based resin, and a polyurethane resin.

According to the present disclosure, a decorative sheet including a barrier layer having excellent solid fragrance resistance and close adhesiveness may be obtained by the barrier layer including a vinyl alcohol based resin and a polyurethane resin. As described above, when a fragrance component included in a solid fragrance penetrates from the surface protecting layer side of the decorative sheet and reaches to the substrate sheet, the substrate sheet may be swelled in some cases. Meanwhile, in order to improve the solid fragrance resistance, provision of a barrier layer on the decorative sheet is assumed. Although the solid fragrance resistance is easily improved with a barrier layer including vinyl alcohol based resin, the close adhesiveness thereof tends to be low.

Here, the vinyl alcohol based resin exhibits excellent solid fragrance resistance by being crystallized by hydrogen bonding. Meanwhile, the barrier layer in the present disclosure includes not only the vinyl alcohol based resin, but also a polyurethane resin. When a resin of a different type such as polyurethane resin is added to the vinyl alcohol based resin, a possibility of inhibiting the crystallization of the vinyl alcohol based resin is assumed. However, the inventors of the present disclosure have surprisingly found out that, even when the polyurethane resin is used, a crystallization, or an approximative crystal structure of the vinyl alcohol based resin occurs, and excellent solid fragrance resistance may be maintained. Further, since the barrier layer in the present disclosure includes the polyurethane resin, the close adhesiveness may be improved.

As described above, both of the solid fragrance resistance and the close adhesiveness may be realized by the barrier layer including the vinyl alcohol based resin and the polyurethane resin.

### 1. Barrier layer

The barrier layer in the present disclosure includes a vinyl alcohol based resin and a polyurethane resin.

### (1) Vinyl alcohol based resin

The vinyl alcohol based resin is a resin including [-CH₂-CH(OH)-] units. Examples of the vinyl alcohol based resin may include a copolymer resin using vinyl alcohol, and a polyvinyl alcohol resin (PVA).

The polyvinyl alcohol resin is generally a resin obtained by saponifying polyvinyl acetate. The saponification degree of the polyvinyl alcohol resin is not particularly limited, and is preferably high from the viewpoint of the solid fragrance resistance. The saponification degree is, for example, 70 mol% or more, may be 80 mol% or more, may be 90 mol% or more, may be 95 mol% or more, and may be 99 mol% or more.

The average polymerization degree of the polyvinyl alcohol resin is not particularly limited, and may be, for example, 200 or more and 6000 or less, may be 300 or more and 4000 or less, and may be 400 or more and 2000 or less.

The polyvinyl alcohol resin may be a modified polyvinyl alcohol resin including a hydrophobic group other than an acetic acid group (-OCOCH₃). By using such a modified polyvinyl alcohol resin, the hydrophobicity (water resistance) of the barrier layer is improved, and a barrier layer also having good sunscreen resistance (resistance to sunscreen cream) may be obtained.

The modified polyvinyl alcohol resin preferably includes a hydrophobic group other than an acetic acid group as a side chain. The hydrophobic group refers to a functional group including at least a carbon, and not including an OH group. The hydrophobic group may be a straight chain, may a branched chain, and may be cyclic. From the viewpoint of crystallization of the vinyl alcohol based resin, the hydrophobic group is preferably a straight chain or a branched chain. The number of carbon atoms of the hydrophobic group is, for example, 2 or more, may be 3 or more, and may be 5 or more. Examples of the hydrophobic group may include a functional group represented by -OR. The R includes at least a carbon. Examples of R may include a hydrocarbon group such as an alkyl group including 3 or more carbon atoms, an alkenyl group including 3 or more carbon atoms, and an alkynyl group including 3 or more carbon atoms.

Examples of the alkyl group including 3 or more carbon atoms may include a n-propyl group, an isopropyl group, a n-butyl group, a sec-butyl group, a t-butyl group, a n-pentyl group, a cyclopentyl group, a n-hexyl group, a cyclohexyl group, a 1-methylpentyl group, a cyclopentylmethyl group, a n-heptyl group, a 1-ethylpentyl group, a cyclohexylmethyl group, and a n-octyl group. Examples of the alkenyl group including 3 or more carbon atoms may include an allyl group, an isopropenyl group, and a butynyl group. Examples of the alkynyl group including 3 or more carbon atoms may include a propynyl group, a propargyl group, and a butynyl group.

The hydrophobic group may include a reactive group. Specifically, in the functional group represented by -OR, R includes at least a carbon, and may further include a reactive group. Examples of the reactive group may include a reactive carbonyl group. The hydrophobic group may include only one reactive group, and may include two or more reactive groups. Examples of the hydrophobic group including two reactive carbonyl groups may include an acetoacetyl group (-OCOCH₂COCH₃).

The modified polyvinyl alcohol resin may include only one type of the hydrophobic group, and may include two or more types. Also, the modified polyvinyl alcohol resin may or may not include an acetic acid group.

Meanwhile, examples of the copolymer resin using vinyl alcohol may include a copolymer of acrylic acid or an acrylic acid salt, and vinyl alcohol; a copolymer of maleic anhydride, maleic acid, or fumaric acid, and vinyl alcohol; and a copolymer of ethylene, and vinyl alcohol (EVOH). Examples of commercially available products of EVOH may include Eval (from Kuraray Co., Ltd.) and Soarnol (from Mitsubishi Chemical Corporation).

The barrier layer may include only one type of vinyl alcohol based resin, and may include two types or more vinyl alcohol based resins.

### (2) Polyurethane resin

The polyurethane resin is a resin obtained by a reaction between a polyol and a polyisocyanate. Also, as necessary, a polyurethane resin may be obtained by further reacting a compound including a hydrophilic functional group in the molecule, or a compound such as a chain extender, in addition to the polyol and the polyisocyanate.

Examples of the polyol may include polyester polyols, polyether polyols, polycarbonate polyols, and polyolefin polyols.

Examples of the polyester polyols may include a condensate of a low molecular diol component such as ethylene glycol, propylene glycol, 1,3-propanediol, 1,4-butanediol, 1,5-pentanediol, 3-methyl-1,5-pentanediol, 1,6-hexanediol, neopentyl glycol, diethylene glycol, triethylene glycol, tetraethylene glycol, dipropylene glycol, tripropylene glycol, bishydroxyethoxybenzene, cyclohexanedimethanol, bisphenol A, and hydrogenated bisphenol A; and a polyvalent carboxylic acid such as succinic acid, adipic acid, sebacic acid, dodecanedicarboxylic acid, maleic anhydride, fumaric acid, 1 3-cyclopentanedicarboxylic acid, phthalic acid, isophthalic acid, terephthalic acid, 1,4-naphthalenedicarboxylic acid, 2,5-naphthalenedicarboxylic acid, 2,6-naphthalenedicarboxylic acid, naphthalic acid, and biphenyl dicarboxylic acid.

Examples of the polyether polyol may include polyethylene glycol, polypropylene glycol, ethylene oxidepropylene oxide copolymer (random and/or block copolymer), and polytetramethylene glycol.

The polycarbonate polyol is, for example, a compound obtained by reacting diol, and a compound to be a carbonyl component. Examples of the diol may include ethylene glycol, diethylene glycol, triethylene glycol, 1,2-propanediol, 1,3-propanediol, 1,3-butanediol, 1,4-butanediol, 1,5-pentanediol, 1,6-hexanediol, 1,8-octanediol, 1,9-nonanediol, 3-methylpentanediol, neopentyl glycol, dipropylene glycol, bisphenol A, hydrogenated bisphenol A, trimethylolpropane, and cyclohexanedimethanol. Meanwhile, the compound to be a carbonyl component is, for example, any one of compound selected from carbonic acid diester, phosgene, or an equivalent thereof. Specific examples thereof may include carbonic acid diesters such as dimethyl carbonate, diethyl carbonate, diisopropyl carbonate, diphenyl carbonate, ethylene carbonate, and propylene carbonate; phosgene; and halogenated formic acid esters such as methyl chloroformate, ethyl chloroformate, and phenyl chloroformate. The polycarbonate polyol is produced by a commonly used method for producing such as transesterification of diol and carbonate; and phosgene method.

Examples of the polyolefin polyol may include polybutadiene polyols, polyisoprene polyols, and hydrogenated polyols thereof.

Examples of the polyisocyanate may include aromatic polyisocyanates, aromatic aliphatic polyisocyanates, alicyclic polyisocyanates, and aliphatic polyisocyanates.

Examples of the aromatic polyisocyanate may include 2,4-tolylene diisocyanate, 2,6-tolylene diisocyanate, 2,2'-diphenylmethane diisocyanate, 2,4'-diphenylmethane diisocyanate, 4,4'-diphenylmethane diisocyanate (MDI), 4,4'-dibenzyl diisocyanate, 1,5-naphthylene diisocyanate, xylylene diisocyanate, 1,3-phenylene diisocyanate, and 1,4-phenylene diisocyanate.

Examples of the aromatic aliphatic polyisocyanate may include tetraalkyldiphenylmethane diisocyanate, dialkyldiphenylmethane diisocyanate, and α,α,α,α-tetramethylxylylene diisocyanate.

Examples of the alicyclic polyisocyanate may include isophorone diisocyanate, hydrogenated xylylene diisocyanate, 4,4'-dicyclohexylmethane diisocyanate, 1,4-cyclohexane diisocyanate, cyclohexylene diisocyanate, methylcyclohexylene diisocyanate, and 1,3-bis(isocyanatemethyl)cyclohexane.

Examples of the aliphatic polyisocyanate may include ethylene diisocyanate, tetramethylene diisocyanate, hexamethylene diisocyanate, dodecamethylene diisocyanate, 1,6,11-undecane triisocyanate, 2,2,4-trimethylhexamethylene diisocyanate, 2,4,4-trimethylhexamethylene diisocyanate, lysine diisocyanate, 2-methylpentane-1,5-diisocyanate, and 3-methylpentane-1,5-diisocyanate.

The weight average molecular weight of the polyurethane resin is not particularly limited, and is preferably as large as possible, by introducing at least one of a branched structure and an internal crosslinked structure. The weight average molecular weight of the polyurethane resin is, for example, 10,000 or more, and may be 50,000 or more. Meanwhile, the weight average molecular weight of the polyurethane resin is, for example, 15,000,000 or less, and may be 5,000,000 or less.

Also, the polyurethane resin may include a hydrophilic functional group to impart dispersibility in water. Examples of the hydrophilic functional group may include a carboxyl group and a sulfonyl group. The hydrophilic functional group may be introduced by the following compounds. Examples thereof may include polyester polyols including the followings as a raw material: carboxyl group-containing compounds such as dimethylolpropionic acid, dimethylolbutanoic acid, lactic acid, and glycine; sulfonic acid group-containing compounds such as taurine; and compounds including at least one of a carboxyl group and a sulfonic acid group. Also, in order to increase the molecular weight of the polyurethane resin, a chain extender may be used. As the chain extender, a diamine or a polyamine which also functions to introduce an internal crosslinked structure, is preferable. Examples of the diamine may include ethylenediamine, trimethylenediamine, piperazine, and isophoronediamine; and examples of the polyamine may include diethylenetriamine, dipropylenetriamine, and triethylenetetramine.

Further, the polyurethane resin is preferably an aqueous polyurethane resin. The aqueous polyurethane resin is an emulsion of a urethane resin. The aqueous polyurethane resin may be a non-reactive type, and may be a reactive type. The reactive type aqueous polyurethane resin protects the terminal isocyanate group by a blocking agent. The aqueous polyurethane resin may be a water soluble type, and may be a self-emulsifying type. Both the water soluble type and the self-emulsifying type include the hydrophilic functional group described above. The aqueous polyurethane resin preferably includes an internal crosslinked structure wherein the polyurethane resin is crosslinked in a network shape. Also, the aqueous polyurethane resin preferably includes a urea bond. The reaction of the isocyanate group and the amine forms a urea bond.

The barrier layer may include only one type of polyurethane resin, and may include two or more types of polyurethane resins.

### (3) Barrier layer

The barrier layer in the present disclosure includes a vinyl alcohol based resin and a polyurethane resin.

In the infrared ray absorption spectrum (IR spectrum), the barrier layer preferably has a peak in a range of 1130cm⁻¹ or more and 1160cm⁻¹ or less. The peak associated with the crystallization of the vinyl alcohol based resin is observed in a range of 1130cm⁻¹ or more and 1160cm⁻¹ or less. By the barrier layer having a peak in a range of 1130cm⁻¹ or more and 1160cm⁻¹ or less, a decorative sheet having excellent solid fragrance resistance may be obtained. The infrared absorption spectrum of the barrier layer may be obtained, for example, by measuring the exposed cross-section of the barrier layer by an attenuated total reflectance method (ATR method). The method for exposing a cross-section may be, for example, a method wherein the surface layer is gradually scraped from the decorative sheet to expose the lower layer one by one, and may be a method wherein the cross-section is entirely exposed using a device such as a microtome or a cutter knife. The former method is effective when the layer structure such as the number of layers and the film thickness is known by a cross-sectional observation. Also, in the latter method, in order to secure the measurement area, the cross-section is preferably exposed by cutting the decorative sheet at an angle.

In the barrier layer, the proportion of the polyurethane resin with respect to a total of the polyvinyl alcohol resin and the polyurethane resin is, for example, 5 mass% or more, may be 10 mass% or more, may be 15 mass% or more, and may be 20 mass% or more. When the proportion of the polyurethane resin is too low, excellent close adhesiveness may not be obtained. Meanwhile, the proportion of the polyurethane resin is, for example, 40 mass% or less, may be 35 mass% or less, may be 30 mass% or less, and may be 25 mass% or less. When the proportion of the polyurethane resin is too high, excellent solid fragrance resistance may not be obtained.

The barrier layer may or may not include a crosslinking agent that improves the crosslinking density of the vinyl alcohol based resin. Examples of the crosslinking agent may include dihydrazide compounds such as adipic acid dihydrazide (ADH); metallic salts; boric acid; and polymeric acids such as polyacrylic acid.

The barrier layer may be a cured product of a resin composition including a vinyl alcohol based resin and a polyurethane resin. The resin composition may include a curing agent. Examples of the curing agent may include carbodiimide based curing agents and isocyanate based curing agents. The carbodiimide based curing agent is not particularly limited as long as it is a compound including a carbodiimide structure (-N=C=N-) in the molecule. Examples of the compound including a carbodiimide group may include N,N'-dicyclohexylcarbodiimide, N,N'-diisopropylcarbodiimide, and 1-ethyl-3-(3-dimethylaminopropyl) carbodiimide hydrochloride salt. Examples of the commercially available products may include Carbodilite V-02, Carbodilite V-02-L2, Carbodilite SV-02, Carbodilite V-04, Carbodilite V-10, Carbodilite SW-12G, Carbodilite E-02, Carbodilite E-03A, and Carbodilite E-05 (all from Nisshinbo Chemical Co., Ltd.).

Examples of the isocyanate based curing agent may include aromatic isocyanates such as 2,4-tolylene diisocyanate, 2,6-tolylene diisocyanate, xylene-1,4-diisocyanate, xylene-1,3-diisocyanate, 4,4'-diphenylmethane diisocyanate, 2,4'-diphenylmethane diisocyanate, 2,2'-diphenylmethane diisocyanate, 4,4'-diphenyl ether diisocyanate, polymethylene polyphenylene polyisocyanate, 2-nitrodiphenyl-4,4'-diisocyanate, 2,2'-diphenylpropane-4,4'-diisocyanate, 3,3'-dimethyl diphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate. Also, examples of the isocyanate compound may include aliphatic isocyanates such as 1,4-diisocyanatobutane, 1,5-diisocyanatopentane, 1,6-diisocyanatohexane (1,6-hexamethylene diisocyanate, HDI), 1,6-diisocyanato-2,2,4-trimethylhexane, and methyl 2,6-diisocyanatohexanoate (lysine diisocyanate). Also, examples of the isocyanate compound may include alicyclic diisocyanates such as isophorone diisocyanate, hydrogenated xylylene diisocyanate, and hydrogenated diphenylmethane diisocyanate.

The proportion of the curing agent included in the resin composition is not particularly limited, and is, for example, 0.5 mass parts or more, may be 1 mass part or more, and may be 3 mass parts or more, with respect to 100 mass parts of the resin. Meanwhile, the proportion of the curing agent is, for example, 50 mass parts or less, and may be 35 mass parts or less, with respect to 100 mass parts of the resin.

In the present disclosure, the layer in direct contact with the barrier layer preferably includes a polyurethane resin. This is because, by the layer in direct contact with the barrier layer including a polyurethane resin, the close adhesion between the layer and the barrier layer is improved. The layer in direct contact with the barrier layer is not particularly limited, and examples thereof may include a surface protecting layer, a primer layer, and a pattern layer. In particular, the layer in direct contact with one surface of the barrier layer, and the layer in direct contact with the other surface of the barrier layer preferably includes a polyurethane resin respectively.

The barrier layer is placed between the surface protecting layer and substrate sheet in the decorative sheet. Also, at least one of a pattern layer and a primer layer, which will be described later, may be placed between the barrier layer and the substrate sheet.

An example of a method for forming a barrier layer may include a method wherein a resin composition including a vinyl alcohol based resin and a polyurethane resin is applied. Examples of the application method may include general methods such as gravure coating, bar coating, roll coating, reverse roll coating, and comma coating. Also, when the resin composition includes a curing agent, a curing treatment is usually carried out to the uncured resin layer (uncured barrier layer) after the application. Examples of the curing treatment may include heat treatment.

The heat treatment temperature is not particularly limited as long as it is a temperature at which a desired curing reaction occurs, and is, for example, 90°C or more, may be 120°C or more, and may be 150°C or more. Meanwhile, the upper limit of the heat treatment temperature may be appropriately selected. The heat treatment method is not particularly limited, and a general heat treatment method may be employed.

The thickness of the barrier layer is, for example, 1 um or more, may be 3 um or more, and may be 5 um or more. When the thickness is too small, the function as a barrier layer may be deteriorated.

Meanwhile, the thickness of the barrier layer is, for example, 50 um or less, may be 30 um or less, and may be 10 um or less. When the thickness is too large, the three-dimensional moldability may be deteriorated.

### 2. Surface protecting layer

The surface protecting layer in the present disclosure is preferably a cured product of a resin composition including at least a resin. The resin composition may include a curing agent. The resin may be a thermosetting resin, and may be an ionizing radiation curable resin such as an electron beam curable resin. Examples of the resin may include a polyurethane resin and a fluororesin, and among them, a polyurethane resin is preferable. This is because a decorative sheet having good scratch resistance may be obtained. Incidentally, the curing agent is the same as the contents described in "1. Barrier layer" above.

The polyurethane resin is preferably a resin capable of reacting with a curing agent. The polyurethane resin is obtained by reaction of a polyol and a polyisocyanate. Also, as necessary, a polyurethane resin may be obtained by further reacting a compound including a hydrophilic functional group in the molecule or a compound such as a chain extender, in addition to the polyol and the polyisocyanate.

The polyurethane resin (second polyurethane resin) in the surface protecting layer and the polyurethane resin (first polyurethane resin) in the barrier layer may be the same resin, and may be different resins. The details of the second polyurethane resin are the same as the first polyurethane resin described above. The second polyurethane resin is preferably an aqueous polyurethane resin. Also, the second polyurethane resin is particularly preferably a thermosetting polyurethane resin capable of accelerating the curing reaction at the same time as the curing treatment of the barrier layer.

The surface protecting layer preferably has a low Martens hardness. This is because a decorative sheet having good scratch resistance may be obtained. The Martens hardness of the surface protecting layer is, for example, 40 N/mm² or less, may be 35 N/mm² or less, and may be 30 N/mm² or less.

Meanwhile, the Martens hardness of the surface protecting layers is, for example, 0.01 N/mm² or more, may be 0.8 N/mm² or more, and may be 3 N/mm² or more.

The Martens hardness may be adjusted by, for example, the crosslink density of the cured resin, and the average molecular weight of the uncured resin. As the crosslinking density of the cured resin increases, the Martens hardness tends to be increased. Also, the Martens hardness may be adjusted by changing the used amount of the curing agent.

The Martens hardness is measured by pushing an indenter into the surface protecting layer. As the indenter, for example, a Vickers indenter may be used. Also, as the measuring instrument, for example, "PICODENTOR HM-500" (from Fischer Instruments Co., Ltd.) may be used. Incidentally, when the depth of penetration of the indenter into the surface protecting layer is sufficiently smaller than the thickness of the surface protecting layer, the influence of the other layer (such as a substrate sheet) of the decorative sheet may be ignored. Specifically, when the depth of penetration of the indenter into the surface protecting layer is approximately 1/10 of the thickness of the surface protecting layer, since the influence of the other layer (such a as substrate sheet) of the decorative sheet may be ignored, even when the decorative sheet itself is measured as a measurement target, the Martens hardness of the surface protecting layer may be measured. Meanwhile, when the influence of the other layer (such as a substrate sheet) of the decorative sheet may not be ignored, it is preferable to measure the Martens hardness with only the surface protecting layer as a measurement target.

An example of a method for forming a surface protecting layer may include a method wherein a resin composition including a polyurethane resin is applied. Examples of the coating method may include the same application method as the barrier layer described above. Also, the uncured resin layer (uncured surface protecting layer) after the application may be subjected to a curing treatment. Examples of the curing treatment may include a heat treatment and an ionizing radiation irradiation treatment.

The heat treatment temperature is not particularly limited as long as it is a temperature at which a desired curing reaction occurs, and is, for example, 50°C or more, may be 70°C or more, and may be 80°C or more. Meanwhile, the upper limit of the heat treatment temperature may be appropriately selected depending on the type of the resin composition and the curing agent. The heat treatment method is not particularly limited, and a general heat treatment method may be employed.

The ionizing radiation irradiation treatment is a treatment wherein the applied uncured resin layer is irradiated with ionizing radiation such as an electron beam and an ultraviolet ray, and cured. When an electron beam is used as the ionizing radiation, the acceleration voltage is not particularly limited, and is, for example, 70 kV or more and 300 kV or less. The radiation dose is also not particularly limited, and is, for example, 5 kGy or more and 300 kGy or less. Meanwhile, when an ultraviolet ray is used as the ionizing radiation, ultraviolet ray having a wavelength of, for example, 190 nm or more and 380 nm or less is preferably use.

The surface protecting layer may include various additives as necessary. Examples of the additives may include weather resistance improver, abrasion resistance improvers, polymerization inhibitors, crosslinking agents, infrared absorbers, antistatic agents, adhesion improvers, leveling agents, thixotropic improvers, coupling agents, plasticizers, defoamers, fillers, solvents, and colorants. Incidentally, the content of the additive may be appropriately set according to the purpose.

Examples of the weather resistance improver may include an ultraviolet absorber and a light stabilizer. The ultraviolet absorber may be an inorganic type, and may be an organic type. Examples of the inorganic ultraviolet absorber may include titanium dioxide, cerium oxide, and zinc oxide. Meanwhile, examples of the organic ultraviolet absorber may include benzotriazole based ultraviolet absorbers. Examples of the light stabilizer may include hindered amine based light stabilizers.

The abrasion resistance improver preferably has, for example, a particle shape. Also, the abrasion resistance improver may be an inorganic type, and may be an organic type. Examples of the inorganic abrasion resistance improver may include α-alumina, silica, kaolinite, iron oxide, diamond, and silicon carbide. Meanwhile, examples of the organic abrasion resistance improver may include a crosslinked acrylic resin and a polycarbonate resin.

The thickness of the surface protecting layer is, for example, 2 um or more, may be 4 um or more, and may be 6 um or more. When the thickness is too small, the function as a protective layer may be deteriorated. Meanwhile, the thickness of the surface protecting layer is, for example, 100 um or less, may be 60 um or less, and may be 30 um or less. When the thickness is too large, the three-dimensional moldability may be deteriorated.

The surface protecting layer preferably has a high elongation at break. The reason therefor is to improve the three-dimensional moldability. The elongation at break of the surface protecting layer in a tensile test at 150°C is, for example, 120% or more, may be 150% or more, and may be 200% or more. Meanwhile, the elongation at break of the surface protecting layer in a tensile test at 150°C is not particularly limited, and is, for example, 500% or less. Incidentally, the elongation at break of the surface protecting layer may be respectively measured, for example, as a decorative sheet or as a surface protecting layer alone, in the following manner.

The elongation at break of the surface protecting layer in the decorative sheet may be measured under conditions according to JIS K 7127 as follows. Firstly, the decorative sheet is cut out to the width of 25 mm and the length of 120 mm to form a test piece. Then, the tensile elongation of the test piece is measured under conditions of a tensile rate of 1000 mm/min, a chuck-to-chuck distance of 80 mm, a marked line-distance of 50 mm, and a temperature of 160°C, until the surface protecting layer cracks. For example, when a thermosetting resin is used for the surface protecting layer and a thermoplastic resin is used for the other layer, the elongation at break of the layer using the thermoplastic resin is generally higher than the layer using thermosetting resin, so that it is easy to determine that the crack generated by measuring the elongation at break of the decorative sheet is derived from the surface protecting layer.

The elongation at break of the surface protecting layer alone may be measured under conditions according to JIS K 7127 as follows. Firstly, a transfer sheet including a surface protecting layer formed on its surface is cut out to the width of 25 mm and the length of 120 mm, and the transfer sheet is peeled off to form a test piece. Then, the tensile elongation of the test piece is measured under measurement conditions of a tensile rate of 1000 mm/min, a chuck-to-chuck distance of 80 mm, a marked line distance of 50 mm, and a temperature of 160°C until the surface protecting layer cracks.

### 3. Substrate sheet

The substrate sheet in the present disclosure includes a resin. The resin used for the substrate sheet is preferably a thermoplastic resin. Examples of the thermoplastic resin may include acrylonitrile-butadiene-styrene resins (ABS resins); acrylic resins; polyolefin resins such as polypropylene and polyethylene; polycarbonate resins; and vinyl chloride resins. Incidentally, one type of these resins may be used alone, and two types or more may be used in a combination. Also, the substrate sheet may be a single-layer sheet, and may be a multi-layer sheet.

The thickness of the substrate sheet varies depending on the application, and is, for example, 0.05 mm or more, and may be 0.1 mm or more. Meanwhile, the thickness of the substrate sheet is, for example, 1.0 mm or less, and may be 0.7 mm or less.

At least one surface of the substrate sheet may be surface-treated. By carrying out the surface treatment, for example, close adhesion between the substrate sheet and the other layers may be improved. Examples of the surface treatment method may include an oxidation method and a roughening method. Examples of the oxidation method may include corona discharge treatment, chromium oxidation treatment, flame treatment, hot air treatment, and ozone and ultraviolet treatment method. Examples of the roughening method may include a sand blasting method and a solvent treatment method. Also, a decorativeness such as a coating and a pattern may be imparted to the substrate sheet. Incidentally, not only the substrate sheet but also at least one surface of the layers constituting the decorative sheet may be surface-treated. The reason therefor is to improve the close adhesiveness between the layers.

### 4. Pattern layer

The decorative sheet in the present disclosure may include a pattern layer. By providing the pattern layer, decorativeness may be easily imparted to the decorative sheet. The pattern layer is preferably placed between the substrate sheet and the barrier layer.

Examples of the pattern of the pattern layer may include: a wood grain pattern; a stone grain pattern wherein a surface of a rock is patterned, such as a marble pattern (for example, a travertine marble pattern); a fabric grain pattern wherein a cloth grain or a cloth-like pattern is patterned; a tile pattern; and a brick work pattern. Also, parquet and patchwork obtained by combining these patterns may be used. Also, the pattern of the pattern layer may be a solid pattern of a single color.

The pattern layer preferably includes a colorant and a binder. Examples of the colorant may include inorganic pigments such as carbon black (black), iron black, titanium white, antimony white, lead yellow, titanium yellow, Bengal red, cadmium red, ultramarine blue, and cobalt blue; organic pigments or dyes such as quinacridone red, isoindolinone yellow, and phthalocyanine blue; metallic pigments such as aluminum and brass; and pearlescent (pearl) pigments such as titanium dioxide-coated mica, and basic lead carbonate.

Examples of the binder may include polyurethane resins, vinyl chloride/vinyl acetate copolymer resins, vinyl chloride/vinyl acetate/acrylic copolymer resins, chlorinated polypropylene resins, acrylic resins, polyester resins, polyamide resins, butyral resins, polystyrene resins, nitrocellulose resins, and cellulose acetate resins.

Also, the pattern layer may include additives such as extender pigments, solvents, stabilizers, plasticizers, catalysts, and curing agents. The thickness of the pattern layer is, for example, 1 um or more and 20 um or less. Examples of the method for forming the pattern layer may include a general printing method such as a gravure printing method.

The decorative sheet in the present disclosure may include a masking layer between the substrate sheet and the pattern layer. By providing the masking layer, for example, the color of the substrate sheet may be suppressed from affecting the pattern layer. The color of the masking layer is preferably an opaque color. Also, the masking layer is preferably a so-called solid layer.

### 5. Primer layer

The decorative sheet in the present disclosure may include a primer layer. By providing the primer layer, for example, even when the surface protecting layer is stretched, occurrence of fine cracks and whitening in the surface protecting layer may be suppressed. The primer layer is preferably placed between the substrate sheeting and the barrier layer. Also, when the decorative sheet includes a pattern layer, the primer layer is preferably placed between the pattern layer and the barrier layer.

The primer layer preferably includes a resin. Examples of such resin may include (meth)acrylic resins, urethane resins, (meth)acrylic-urethane copolymer resins, vinyl chloride-vinyl acetate copolymer resins, polyester resins, butyral resins, chlorinated polypropylene, and chlorinated polyethylene. Incidentally, one type of these resins may be used alone, and two types or more may be used in combination. Also, in the present specification, (meth)acrylic means acrylic or methacrylic.

Examples of the (meth)acrylic resin may include a homopolymer of a (meth)acrylic acid ester; a copolymer of two or more different types of (meth)acrylic acid ester monomers; and a copolymer of a (meth)acrylic acid ester and another monomer. Specific examples of the (meth)acrylic resin may include polymethyl(meth)acrylate, polyethyl(meth)acrylate, polypropyl(meth)acrylate, polybutyl(meth)acrylate, methyl(meth)acrylate-butyl (meth)acrylate copolymers, ethyl(meth)acrylate-butyl (meth)acrylate copolymers, ethylene-methyl(meth)acrylate copolymers, and styrene-methyl(meth)acrylate copolymers.

Examples of the urethane resin may include a polyurethane including a polyol (polyhydric alcohol) as a main agent and an isocyanate as a crosslinking agent (curing agent). The polyol includes two or more hydroxyl groups in the molecule. Examples of the polyol may include polyester polyol, polyethylene glycol, polypropylene glycol, acrylic polyol, and polyether polyol. Meanwhile, examples of the isocyanate may include polyvalent isocyanates including two or more isocyanate groups in the molecule; aromatic isocyanates such as 4,4-diphenylmethane diisocyanate; and aliphatic (or alicyclic) isocyanates such as hexamethylene diisocyanate, isophorone diisocyanate, hydrogenated tolylene diisocyanate, and hydrogenated diphenylmethane diisocyanate. Also, the primer layer may include a butyral resin in addition to the urethane resin.

Examples of the (meth)acrylic-urethane copolymer resin may include acrylic/urethane (polyester urethane) block copolymer resins. As the curing agent, various types of isocyanates described above may be used. The acrylic/urethane proportion (mass proportion) in the acrylic/urethane (polyester urethane) block copolymer resin is, for example, (9/1) or more and (1/9) or less, and may be (8/2) or more and (2/8) or less.

The thickness of the primer layer is, for example, 0.1 um or more, and may be 1 um or more. Meanwhile, the thickness of the primer layer is, for example, 10 um or less. Examples of the method for forming a primer layer may include general coating methods such as gravure coating, gravure reverse coating, gravure offset coating, spinner coating, roll coating, and reverse roll coating.

### 6. Adhesive layer

Also, the decorative sheet in the present disclosure may include an adhesive layer at a position opposite side to the surface protecting layer, with respect to the substrate sheet. By providing the adhesive layer, close adhesiveness between the decorative sheet and the resin molded article is improved.

The adhesive layer preferably includes a resin. Examples of the resin used for the adhesive layer may include thermoplastic resins and thermosetting resins. Examples of the thermoplastic resin may include acrylic resins, acrylic-modified polyolefin resins, chlorinated polyolefin resins, vinyl chloride-vinyl acetate copolymers, thermoplastic urethane resins, thermoplastic polyester resins, polyamide resins, and rubber based resins. Examples of the thermosetting resin may include urethane resins and epoxy resins. Incidentally, one type of these resins may be used alone, and two types or more may be used in a combination.

The thickness of the adhesive layer is, for example, 0.1 um or more, and may be 1 um or more. Meanwhile, the thickness of the adhesive layer is, for example, 10 um or less. The method for forming an adhesive layer is not particularly limited, and examples thereof may include general application methods.

### 7. Decorative sheet

The decorative sheet in the present disclosure includes at least a substrate sheet, a barrier layer, and a surface protecting layer in this order, and may further include at least one of a pattern layer, a primer layer, and an adhesive layer.

Also, the present disclosure may provide a method for producing the decorative sheet described above. That is, the present disclosure may provide a method for producing the decorative sheet described above, the method comprising a barrier layer forming step of forming the barrier layer; and a surface protecting layer forming step of forming the surface protecting layer.

Also, the decorative sheet in the present disclosure is preferably used in the production of a decorative resin molded article (particularly, three-dimensional molding). Details of the decorative resin molded article will be described later.

### B. Decorative resin molded article

The decorative resin molded article in the present disclosure includes a resin molded article, and a decorative sheet placed on a surface of the resin molded article.

According to the present disclosure, by using the decorative sheet described above, a decorative resin molded article including a barrier layer having excellent solid fragrance resistance and close adhesiveness may be obtained.

Since the decorative sheet in the present disclosure is the same as the content described in "A. Decorative sheet" above, the descriptions herein will be omitted. The decorative sheet in the decorative resin molded article is usually formed so as to follow the shape of the outer surface of at least a part of the resin molded article. Also, the decorative sheet in the decorative resin molded article is usually integrated with the resin molded article. Also, in the decorative sheet in the decorative resin molded article, the surface protecting layer is usually placed on the outer side, and the substrate sheet is placed on the inner side.

The resin molded article in the present disclosure preferably includes, for example, at least one of a curved surface portion, a bent surface portion, and a flat portion. The resin used for the resin molded article may be a thermoplastic resin, and may be a thermosetting resin.

Examples of the thermoplastic resin may include polyolefin resins such as polyethylene and polypropylene; acrylonitrile-butadiene-styrene resins (ABS resins); styrene resins; polycarbonate resins; acrylic resins; and vinyl chloride resins. Meanwhile, examples of the thermosetting resin may include urethane resins and epoxy resins. Incidentally, one type of these resins may be used alone, and two types or more may be used in a combination.

Examples of the method for producing the decorative resin molded article in the present disclosure may include injection molding methods such as insert molding method, injection molding simultaneous decoration method, blow molding method, and gas injection molding method.

For example, in the insert molding method, in a vacuum molding step, a decorative sheet is vacuum-molded into a surface shape of a molded article in advance by a vacuum forming mold (off-line preliminary mold), and then, as necessary, an extra portion is trimmed to obtain a molded sheet. This molded sheet is inserted into an injection mold, the injection mold is clamped, flowable resin is injected into the mold, and solidified. Thus, the decorative sheet is integrated on the outer surface of the resin molded article simultaneously with the injection molding. Thereby, a decorative resin molded article is obtained.

Also, for example, in the injection molding simultaneous decoration method, the decorative sheet is placed in a female mold which is also used as a vacuum mold provided with a suction hole for injection molding, and preliminary molding (in-line preliminary molding) is carried out with the female mold. Then, the injection mold is clamped, a flowable resin is injected into the mold, and solidified to integrate the decorative sheet onto the outer surface of the resin molded article simultaneously with the injection molding. Thus, a decorative resin molded article is obtained.

Also, the decorative resin molded article in the present disclosure may also be produced by a decorative method wherein a decorative sheet is adhered onto a three-dimensional resin molded article prepared in advance, such as a vacuum pressure bonding method. In the vacuum pressure bonding method, a decorative sheet and a resin molded article are firstly placed in a vacuum pressure bonding device including a first vacuum chamber located on the upper side and a second vacuum chamber located on the lower side, so that the decorative sheet faces the first vacuum chamber side, the resin molded article faces the second vacuum chamber side, and the substrate sheet of the decorative sheet faces the resin molded article side, and the two vacuum chambers are brought into a vacuum state. The resin molded article is installed on an elevating table capable of being elevated up and down, that is provided in the second vacuum chamber. Then, the first vacuum chamber is pressurized, and the resin molded article is pressed against the decorative sheet using the elevating table, and the decorative sheet is adhered to the surface of the resin molded article while being stretched, by utilizing the pressure difference between the two vacuum chambers. Finally, the two vacuum chambers are opened to the atmosphere, and an extra portion of the decorative sheet is trimmed as necessary, thereby, a decorative resin molded article may be obtained. In the vacuum pressure bonding method, in order to soften the decorative sheet and enhance moldability, a step of heating the decorative sheet is preferably included before the step of pressing the resin molded article against the decorative sheet. Particularly, the vacuum pressure bonding method including such step is sometimes referred to as a vacuum heat-pressure bonding method.

Applications of the decorative resin molded article in the present disclosure may include interior materials or exterior materials for vehicles such as automobiles; fittings such as window frames and door frames; interior materials for building materials such as walls, floors, and ceilings; enclosures for home appliances such as television receivers and air conditioners; and containers.

Incidentally, the present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### Examples

### [Example 1]

As a substrate sheet, an ABS resin film (bending elastic modulus: 2000 MPa, thickness: 400 um) was prepared. Then, a wood grain pattern layer was formed on the surface of the substrate sheet by gravure printing using an ink including an acrylic resin as a binder. As described above, a first member including a substrate sheet and a pattern layer was obtained.

Then, as a polyurethane resin for forming a surface protecting layer, an aqueous polyurethane resin dispersion 1 was prepared as follows. Firstly, 65.00 mass parts of polycarbonate polyol (trade name: "Duranol T-4671" from Asahi Kasei Corporation, including 1,4-butanediol and 1,6-hexanediol as raw materials. Repeating units: 1,4-butanediol/1,6-hexanediol = 7/3 (mole proportion), hydroxyl value = 112.2 mgKOH/g, number average molecular weight = 1000), 5.00 mass parts of dimethylol propionic acid, and 100 mass parts of methyl ethyl ketone were added to a four-neck flask provided with a stirrer, a reflux cooling tube, a temperature gauge, and a nitrogen blow-in tube, and sufficiently stirred and dissolved. Then, 30.00 mass parts of dicyclohexyl methane diisocyanate was added, and reacted at 75°C to bring NCO content to 1.00%. Then, this prepolymer solution was cooled to 45°C, 3.77 mass parts of triethylamine was added as a neutralizing agent, and emulsion-dispersed using a homomixer while gradually adding 400.00 mass parts of water. Then, 0.65 mass parts of diethylenetriamine was added, and chain extension reaction was carried out at 30°C for 30 minutes. Methyl ethyl ketone was distilled away from this resin solution under heating and reduced pressure to obtain an aqueous polyurethane resin dispersion 1 including a solid content of 25%.

A resin composition including at proportion of 100 mass parts of the aqueous polyurethane resin dispersion 1, and 5 mass parts of a carbodiimide based curing agent (V-02-L2 from Nisshinbo Chemical Co., Ltd., solid content: 40 mass%) was prepared. Then, the prepared resin composition was applied on one side of a polyethylene terephthalate sheet as a transfer substrate to form an uncured surface protecting layer. The uncured surface protecting layer was heated at 100°C for 5 minutes to form a surface protecting layer (cured thickness: 10 um).

Then, as a mixed resin of a polyvinyl alcohol based resin and a polyurethane resin for forming a barrier layer, a polyvinyl alcohol-polyurethane mixture resin 1 was prepared as follows. Firstly, polyvinyl alcohol (PVA1: Gohsenx Z series (Z-200) from Mitsubishi Chemical Co., Ltd., acetoacetyl group-modified polyvinyl alcohol) was charged into water in a beaker equipped with a stirrer, while stirring at room temperature. After confirming that PVA was uniformly dispersed in water, the solution was slowly warmed to 95°C to completely dissolve PVA. Then, the mixture was slowly cooled to room temperature to obtain a polyvinyl alcohol aqueous solution 1. Then, the polyvinyl alcohol aqueous solution 1 and the aqueous urethane resin dispersion 1 were charged into a beaker equipped with a stirrer so that the polyvinyl alcohol : aqueous urethane resin dispersion 1 = 7:3 in a solid content proportion. The mixture was stirred until the liquid became uniform, and a polyvinyl alcohol-polyurethane mixture resin 1 was obtained.

Then, the prepared polyvinyl alcohol-polyurethane mixture resin 1 was applied on the surface of the surface protecting layer to form an uncured barrier layer. The uncured barrier layer was heated at 120°C for 5 minutes to form a barrier layer (cured thickness: 5 pm). As described above, a second member including the transfer substrate, the surface protecting layer, and the barrier layer in this order was obtained.

A composition including an acrylic polyol and hexamethylene diisocyanate was applied to the surface of the obtained second member to form a primer layer. The first member and the second member were arranged such that the pattern layer of the first member and the barrier layer of the second member were facing to each other via the primer layer. Then, the transfer substrate was peeled off from the second member to obtain a decorative sheet.

### [Examples 2 to 8]

A decorative sheet was obtained in the same manner as in Example 1 except that the applied amount and the composition of the composition for forming barrier layer were changed as shown in Table 1. Incidentally, in Table 1, PVA2 was N type-A type Gohsenol (N-300) from Mitsubishi Chemical Co., Ltd., that is polyvinyl alcohol; PVA3 was Nichigo G-polymer (OKS-1109) from Mitsubishi Chemical Co., Ltd., that is polyvinyl alcohol including 1,2-glycol bond; PVA4 was D-polymer (DF-17) from Japan VAM & Poval Co., Ltd., that is diacetone modified polyvinyl alcohol; EVOH was Eversolve #10 From Nihon Cima Co., LTD.

### [Example 9]

The prepared polyvinyl alcohol-polyurethane mixture resin 1 was applied on one surface of the transfer substrate in Example 1 to form an uncured barrier layer. The uncured barrier layer was heated at 120°C for 5 minutes to form a barrier layer (cured thickness: 5 um). As described above, a third member including the transfer substrate, and the barrier layer in this order was obtained.

A composition including an acrylic polyol and hexamethylene diisocyanate was applied to the surface (barrier layer surface) of the obtained third member to form a primer layer. The first member and the third member were arranged such that the pattern layer of the first member in Example 1 and the barrier layer of the third member were facing to each other via the primer layer. Then, the transfer substrate was peeled off from the third member.

As described above, a fourth member including the substrate sheet (ABS resin film), the pattern layer, the primer layer, and the barrier layer in this order was obtained.

Then, bifunctional urethane acrylate including a polycarbonate structure (weight average molecular weight: 20,000) was applied to the barrier layer of the fourth member to form an uncured surface protecting layer. A surface protecting layer (cured thickness: 10 um) was formed by irradiating electron beam to the uncured surface protecting layer at accelerating voltage of 165 kV, and irradiation dose of 50 kGy (5 Mrad). As described above, a decorative sheet was obtained.

### [Example 10]

A decorative sheet was obtained in the same manner as in Example 1 except that the applied amount and the composition of the composition for forming barrier layer were changed as shown in Table 1, and that the uncured barrier layer was heated at 120°C for 2 minutes.

### [Example 11]

A decorative sheet was obtained in the same manner as in Example 1 except that the applied amount and the composition of the composition for forming barrier layer were changed as shown in Table 1.

### [Comparative Example 1]

A decorative sheet was produced in the same manner as in Example 1 except that the vinyl alcohol based resin was not used for the barrier layer.

### [Comparative Examples 2 to 6]

Decorative sheets were produced respectively in the same manner as in Example 1, and Examples 5 to 8 except that the polyurethane resin was not used for the barrier layers.

### [Evaluation]

### (Solid fragrance resistance)

A solid fragrance cut into a predetermined size was placed on the decorative sheet obtained in each Example and each Comparative Example, and heated at 70°C for 4 hours while applying a load of 400 g. Then, the solid fragrance was removed, and after wiping the surface with a wipe, appearance was observed visually. The results were evaluated as follows. The results are shown in Tables 1 and 2. The solid fragrance was a commercially available product mainly including piperonal, vanillin, asarone, rosin, benzyl benzoate, and dipropylene glycol as fragrance components.
5: no trace
4: a slight trace on the applied layer
3: trace on the applied layer
2: base material of the substrate sheet was exposed
1: the solid fragrance could not be removed from the substrate sheet due to adhesion

### (Close adhesiveness test)

The close adhesiveness of the decorative sheet obtained in each Example and each Comparative Example was evaluated based on a cross-cut adhesion test according to JIS K 5400. Specifically, 11 horizontal and vertical cuts were made on the surface protecting layer side surface of the decorative sheet with interval of 1 mm, 100 grids with 1 mm width were prepared, a piece of cellophane tape (from Nichiban Co., LTD.) was adhered thereon, and peeled off quickly at 90°. The close adhesiveness at the time with respect to the grid surface was evaluated. The results were evaluated as follows.
5: no peel
4: peel at the outside of the grid
3: a slight peel within the grid
2: peel of approximately 50% within the grid
1: peel allover

### (Three-dimensional moldability)

The decorative sheet obtained in each Example and each Comparative Example was molded under vacuum to evaluate the three-dimensional moldability. Specifically, the decorative sheet was heated with an infrared heater to 160°C to soften thereof. Then, vacuum mold was carried out with a mold for vacuum mold (maximum elongation rate 250%), the decorative sheet was molded in accordance with the inner shape of the mold. After cooling, the decorative sheet was released from the mold. The appearance of the surface protecting layer of the decorative sheet after releasing from the mold was evaluated. The results were evaluated as follows.
3: no defect such as a peel was confirmed
2: a slight defect such as a peel was confirmed
1: remarkable defects such as a peel were confirmed

### (Sunscreen resistance)

The sunscreen resistance of the decorative sheets obtained in Examples 1 to 3, 5 to 7, and Comparative Examples 1 to 5 were evaluated. Specifically, 50 mg of commercially available sunscreen cosmetics (sunscreen cream) was applied evenly to 10 mm length × 10 mm width portion of the surface of the decorative sheet. An aluminum plate was placed so as to cover the applied portion, and left to stand for 1 hour in an oven at 60°C, while applying load of 400 g. Then, the decorative sheet was taken out, and after washing the surface with a neutral detergent, the condition of the applied portion was visually observed to evaluate the chemical resistance of the decorative sheet according to the following standards. The sunscreen cosmetics used herein was a commercially available product, including 2-ethylhexyl salicylate, homosalate, octocrylene, and phenoxyethanol as components, and is highly erosive with respect to a rein surface. The results were evaluated as follows. Incidentally, if the evaluation is 3 or more, it may be evaluated as having a sunscreen resistance. Also, a hyphen (-) indicates that the sample was not evaluated.
5: no trace on the applied layer, at all
4: practically nought trace on the applied layer
3: a slight trace on the applied layer
2: a noticeable trace on the applied layer
1: base material of the substrate sheet was exposed

### (IR spectroscopy)

The infrared ray absorption spectrum (IR spectrum) of the barrier layer of the decorative sheet obtained in each Example was measured. The barrier layer was exposed to the surface by cutting out the surface protecting layer of the decorative sheet with a cutter knife, and removing. As an IR spectrum analysis device, FT/IR6100 from JASCO Corporation was used. The IR spectrum measurement was carried out by an attenuated total reflectance method (ATR method). The result of a representative example (Example 3) is shown in FIG. 2. Also, existence and nonexistence of the peak associated with the crystallization of the vinyl alcohol based resin is shown in the column "Existence/nonexistence of crystalline peak (IR)" of Tables 1 and 2.

**[Table 1]**

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Barrier layer | Type of vinyl alcohol based resin | PVA1 | PVA1 | PVA1 | PVA1 | PVA2 | PVA3 | PVA4 | EVOH | PVA1 | PVA1 | PVA1 |
| | Proportion of vinyl alcohol based resin [mass%] | 70 | 70 | 70 | 90 | 70 | 70 | 70 | 90 | 70 | 70 | 60 |
| | Proportion of PU [mass%] | 30 | 30 | 30 | 10 | 30 | 30 | 30 | 10 | 30 | 30 | 40 |
| | Hydrophobic group other than acetic acid group | Yes | Yes | Yes | Yes | No | No | Yes | No | Yes | Yes | Yes |
| Applied amount [g/m²] | | 3 | 4 | 5 | 5 | 5 | 5 | 5 | 5 | 5 | 5 | 5 |
| Existence/nonexistence of crystalline peak (IR) | | Yes | Yes | Yes | Yes | Yes | Yes | Yes | Yes | Yes | No | Yes |
| Close adhesiveness | | 5 | 5 | 5 | 3 | 5 | 5 | 5 | 5 | 5 | 5 | 5 |
| Moldability | | 3 | 3 | 3 | 3 | 3 | 3 | 3 | 3 | 3 | 3 | 3 |
| Solid fragrance resistance | | 5 | 5 | 5 | 5 | 5 | 5 | 5 | 5 | 5 | 5 | 4 |
| Sunscreen resistance | | 4 | 4 | 4 | - | 3 | 3 | 4 | - | - | 4 | 4 |

**[Table 2]**

| | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| Barrier layer | Type of vinyl alcohol based resin | - | PVA1 | PVA2 | PVA3 | PVA4 | EVOH |
| | Proportion of vinyl alcohol based resin [mass%] | 0 | 100 | 100 | 100 | 100 | 100 |
| | Proportion of PU [mass%] | 100 | 0 | 0 | 0 | 0 | 0 |
| | Hydrophobic group other than acetic acid group | - | Yes | No | No | Yes | No |
| Applied amount [g/m²] | | 5 | 5 | 5 | 5 | 5 | 5 |
| Existence/nonexistence of crystalline peak (IR) | | No | Yes | Yes | Yes | Yes | Yes |
| Close adhesiveness | | 5 | 1 | 1 | 1 | 1 | 1 |
| Moldability | | 3 | 1 | 1 | 1 | 1 | 1 |
| Solid fragrance resistance | | 1 | 5 | 5 | 5 | 5 | 5 |
| Sunscreen resistance | | 1 | 1 | 1 | 1 | 1 | - |

As shown in Tables 1 and 2, it was confirmed that the barrier layer exhibits good solid fragrance resistance by including the vinyl alcohol based resin. It is considered that, since a peak was confirmed at 1141 cm⁻¹ as shown in FIG. 2, this was because the polyvinyl alcohol was crystallized. Also, as shown in Example 10, even when a clear peak could not be confirmed at 1141 cm⁻¹ in the IR absorption spectrum, the polyvinyl alcohol is presumed to have an approximative crystal structure, and it was confirmed that a sufficient barrier property may be imparted by adjusting the thickness of the barrier layer. Further, since the barrier layer includes the polyurethane resin in each Example, the close adhesiveness and the moldability were also excellent. Also, the Martens hardness of all of the surface protecting layer of the adhesive sheet in each Example was 40 N/mm² or less.

Further, the sunscreen resistance in Examples 1 to 3 and 7 was higher than that in Examples 5 to 6. It is considered that the reason was because the hydrophobicity of the barrier layer was high in Examples 1 to 3 and 7, since PVA1 or PVA 4 including hydrophobic group other than acetic acid group was used as the vinyl alcohol based resin.

### Reference Signs List

- 1: substrate sheet
- 2: pattern layer
- 3: primer layer
- 4: barrier layer
- 5: surface protecting layer
- 10: decorative sheet

## Claims

1. A decorative sheet comprising at least a substrate sheet, a barrier layer, and a surface protecting layer in this order,
wherein the barrier layer includes a vinyl alcohol based resin, and a polyurethane resin.

2. The decorative sheet according to claim 1, wherein the barrier layer has a peak in a range of 1130 cm⁻¹ or more and 1160 cm⁻¹ or less in an infrared ray absorption spectrum.

3. The decorative sheet according to claim 1 or 2, wherein a proportion of the polyurethane resin with respect to a total of the vinyl alcohol based resin and the polyurethane resin in the barrier layer is 5 mass% or more and 40 mass% or less.

4. The decorative sheet according to any one of claims 1 to 3, wherein the vinyl alcohol based resin is a modified polyvinyl alcohol resin including a hydrophobic group other than an acetic acid group.

5. The decorative sheet according to claim 4, wherein the hydrophobic group includes a reactive group.

6. The decorative sheet according to claim 5, wherein the reactive group is a reactive carbonyl group.

7. The decorative sheet according to claim 6, wherein the modified polyvinyl alcohol resin includes an acetoacetyl group containing the reactive carbonyl group as the hydrophobic group.

8. The decorative sheet according to any one of claims 1 to 7, wherein the surface protecting layer includes a polyurethane resin.

9. The decorative sheet according to any one of claims 1 to 8, wherein a Martens hardness of the surface protecting layer is 40 N/mm² or less.

10. The decorative sheet according to any one of claims 1 to 9, wherein the surface protecting layer and the barrier layer are in direct contact.

11. A decorative resin molded article comprising a resin molded article, and a decorative sheet placed on a surface of the resin molded article,
wherein the decorative sheet includes at least a substrate sheet, a barrier layer, and a surface protecting layer in this order, and
the barrier layer includes a vinyl alcohol based resin, and a polyurethane resin.
